# EUROPEAN PATENT APPLICATION

(11) **EP 4 840 660 A1**
(43) Date of publication of application: **18.11.2026**
(21) Application number: 26174659.8
(22) Date of filing: 27.04.2026
(51) Int. Cl.: B60J 5/06, B60K 1/04, E05D 15/10

(54) **VEHICLE EQUIPPED WITH SLIDING DOOR**

(30) Priority: 15.05.2025 JP 2025081842
(71) Applicant: Toyota Jidosha Kabushiki Kaisha, Toyota-shi, Aichi-ken 471-8571 (JP); AISIN CORPORATION, Kariya-shi, Aichi-ken 448-8650 (JP)
(72) Inventor: TAKAHASHI, Jumpei, TOYOTA-SHI, AICHI-KEN, 471-8571 (JP); TOYOMURA, Yoshinari, TOYOTA-SHI, AICHI-KEN, 471-8571 (JP); SATO, Eisuke, KARIYA-SHI, AICHI-KEN, 448-8650 (JP); FUKAMI, Yuta, KARIYA-SHI, AICHI-KEN, 448-8650 (JP)
(74) Representative: Cabinet Beau de Loménie

(57) **Abstract**

A vehicle (10) equipped with a sliding door (18) includes a body side including an entrance/exit opening (16) through which an occupant enters or exits from the vehicle; a sliding door (18) configured to slide to open and close the entrance/exit opening (16); a lower rail (24) disposed in a lower part of the sliding door (18); a lower hinge (34) disposed on the body side (14) and configured to be guided by the lower rail (24); and a battery (84) disposed under a floor (90) of the vehicle. The lower rail (24) and the lower hinge (34) are disposed further upward than the battery (84).

## Description

### TECHNICAL FIELD

The present specification discloses a vehicle equipped with a sliding door.

### BACKGROUND

A vehicle equipped with a sliding door for opening and closing an entrance/exit opening on a vehicle body side has been conventionally known. A vehicle equipped with a sliding door, which will be hereinafter referred to as a "sliding-door-equipped vehicle", includes an upper rail, a center rail, and a lower rail, disposed on the upper portion, the center portion, and the lower portion, respectively, on the vehicle body side. The sliding door includes an upper hinge, a center hinge, and a lower hinge corresponding to the respective rails. Each hinge includes one or more rollers configured to roll in contact with the corresponding rail. The sliding door is opened or closed with the respective hinges being guided by the corresponding rails.

JP 2024-077771 A discloses a vehicle lower structure including a lower sliding rail (corresponding to a lower rail) that supports a sliding door in a slidable manner toward the opening/closing direction. The lower sliding rail is disposed under a rocker panel that forms a lower edge portion of a door opening that is opened or closed by the sliding door. Interior members including a battery, for example, are disposed in a further inward region in the vehicle width direction with respect to the lower rail.

### SUMMARY

As disclosed in JP 2024-077771 A, a conventional sliding-door-equipped vehicle includes a lower rail for the sliding door in a lower side portion of the vehicle body, and further includes a battery for traveling in a further inward region in the vehicle width direction with respect to the lower rail. This configuration prevents installation of the battery in the lower side portion of the vehicle body where the lower rail is disposed, and therefore prevents extension of the battery outward in the vehicle width direction. This leads to a decrease in the capacity of the battery.

The present specification therefore discloses a vehicle equipped with a sliding door which enables an increase in the capacity of a battery.

A vehicle equipped with a sliding door, which will be hereinafter referred to as a "sliding-door-equipped vehicle", according to the present disclosure includes a body side including an entrance/exit opening through which an occupant enters or exits from the vehicle, a sliding door configured to slide to open or close the entrance/exit opening, a lower rail disposed in a lower part of the sliding door, a lower hinge disposed on the body side and configured to be guided by the lower rail, and a battery disposed under a floor of the vehicle. The lower rail and the lower hinge are disposed further upward than the battery.

This configuration, in which the lower rail is disposed in a lower part of the sliding door, eliminates a lower rail disposed on a body side. This enables extension of the battery outward in the vehicle width direction to thereby increase the capacity of the battery. Further, the configuration in which the lower rail and the lower hinge are disposed above the battery prevents the lower rail and the lower hinge from interfering with the battery when the lower rail and the lower hinge move inward in the vehicle width direction of the vehicle body in the event of a side collision.

The sliding-door-equipped vehicle according to the present disclosure may further include a rocker panel extending in a vehicle length direction and defining a lower edge of the entrance/exit opening, and the rocker panel may be located further outward in a vehicle width direction than the battery and may be adjacent to the battery in the vehicle width direction.

This configuration allows the rocker panel to deform and absorb an impact energy to thereby protect the battery in the event of a side collision. Further, extension of the battery to a location adjacent to the rocker panel results in an increase in the capacity of the battery.

In the sliding-door-equipped vehicle according to the present disclosure, the rocker panel may be connected with the battery via an energy-absorbing member interposed between the rocker panel and the battery.

This configuration allows the rocker panel and the energy-absorbing member to absorb an impact energy in the event of a side collision to thereby protect the battery and reduce a collision load applied to the battery.

In the sliding-door-equipped vehicle according to the present disclosure, the rocker panel may be spaced from the battery by an interval of 20 mm to 40 mm in the vehicle width direction.

This configuration reduces an unnecessary space between the rocker panel and the battery, to thereby increase the capacity of the battery.

In the sliding-door-equipped vehicle according to the present disclosure, in a closed state of the sliding door, at least a part of the lower rail and at least a part of the lower hinge may be disposed further outward in the vehicle width direction than the rocker panel.

This configuration allows a colliding object to come into contact with the lower rail and the lower hinge before contacting with the rocker panel in the event of a side collision, thereby reducing a collision load applied to the rocker panel. This further protects the battery disposed further inward in the vehicle width direction than the rocker panel.

In the sliding-door-equipped vehicle according to the present disclosure, in a closed state of the sliding door, at least a part of the lower rail and at least a part of the lower hinge may be disposed above the rocker panel.

This configuration enables the lower rail, the lower hinge, and the rocker panel to share the bearing of the collision load in the event of a side collision, thereby preventing intrusion of the colliding object inward of the vehicle body in the vehicle width direction.

In the sliding-door-equipped vehicle according to the present disclosure, the lower hinge may be pivotable with respect to a fixing member disposed on a rear edge portion of the entrance/exit opening and may, in an open state of the sliding door, be adjacent to an outer wall protruding outward in the vehicle width direction to form a rear wheel well and protruding in front of the rear wheel well.

This configuration prevents the lower hinge from obstructing an occupant entering or exiting from the vehicle through the entrance/exit opening in the open state of the sliding door.

The technique disclosed in the present specification enables an increase in the capacity of a battery in a vehicle equipped with a sliding door.

### BRIEF DESCRIPTION OF DRAWINGS

Embodiments of the present disclosure will be described by reference to the following figures, wherein:
FIG. 1 is a side view illustrating a vehicle with a sliding door being partially open;
FIG. 2 is a side view illustrating a vehicle with a sliding door being closed;
FIG. 3 schematically illustrates rail-hinge pairs disposed in an upper part, center part, and lower part of the vehicle, respectively;
FIG. 4 is a perspective view illustrating a part of an upper hinge and a part of an upper rail;
FIG. 5 is a perspective view illustrating a lower hinge;
FIG. 6 shows a positional relation among a lower hinge, a lower rail, a rocker panel, and a battery;
FIG. 7 is a cross sectional view taken along line A-A of FIG. 6;
FIG. 8 is a cross sectional view taken along line B-B of FIG. 6;
FIG. 9 schematically illustrates a lower structure of a vehicle according to a comparative example;
FIG. 10 schematically illustrates a lower structure of a vehicle according to the comparative example; and
FIG. 11 schematically illustrates a lower structure of a vehicle according to a further comparative example.

### DESCRIPTION OF EMBODIMENTS

With reference to the drawings, a vehicle equipped with a sliding door, which will be hereinafter also referred to as "a sliding-door-equipped vehicle", will be described. Similar elements are denoted with similar reference numerals in all drawings, and description thereof is not repeated. In the following description, terms representing front, rear, left, and right, for example, refer to directions related to a vehicle, unless otherwise specified. Further, the side closer to the center of a vehicle in the left and right direction (width direction) of the vehicle is referred to as inward in the vehicle width direction and the side further from the vehicle center is referred to as outward in the vehicle width direction. In each drawing, the direction of an arrow FR indicates forward, the direction of an arrow UP indicates upward, the direction of an arrow LH indicates leftward, and the direction of an arrow OUT indicates outward in the vehicle width direction.

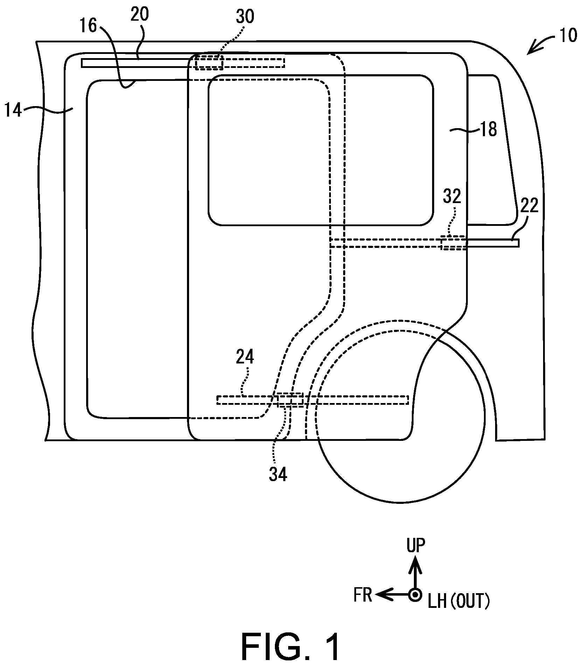

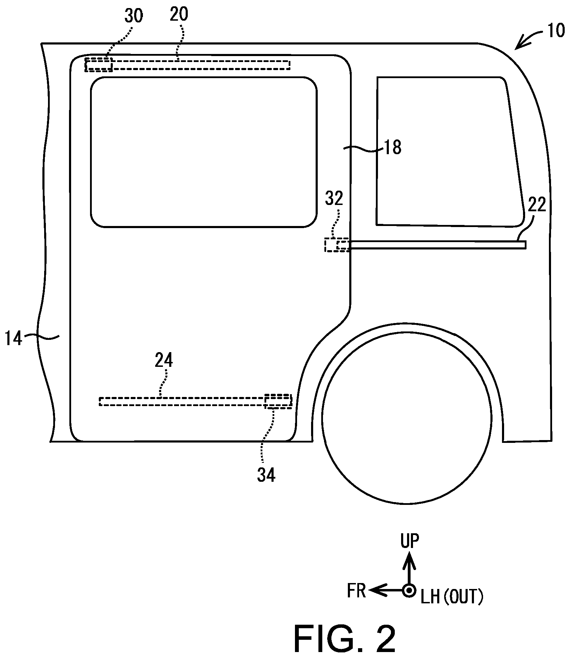

FIG. 1 is a side view illustrating a vehicle 10, with a sliding door 18 partially open. FIG. 2 is a side view illustrating the vehicle 10, with the sliding door 18 being closed. FIGs. 1 and 2 each show a part of the rear part of the vehicle 10. The vehicle 10 may be, for example, a battery electric vehicle, a hybrid electric vehicle, or a plug-in hybrid electric vehicle. The technique disclosed in the present specification may be applied to vehicles including a battery under the floor.

The sliding door 18 (which will be hereinafter also referred simply as a "door 18") is disposed on a side part of the vehicle 10 adjacent to a rear seat. The door 18 is disposed on each of left and right sides of the vehicle 10. FIGs. 1 and 2 illustrate a vehicle side structure including a left side door 18. The vehicle side structure on the right side may be symmetrical to the illustrated left side structure. It may be the case that the door 18 is disposed on only one of the left and right sides of the vehicle 10.

The vehicle 10 includes a body side 14 having an entrance/exit opening 16. The entrance/exit opening 16 is a gate for boarding and unboarding of occupants. The entrance/exit opening 16 has a substantially rectangular shape. The door 18 slides to open or close the entrance/exit opening 16. The door 18 also has a substantially rectangular shape in a side view, and has a size that covers the entrance/exit opening 16. To open the door 18, the door 18 in the closed state first moves outward in the width direction of the vehicle 10 while sliding, and then further slides along the body side face on the outer side of the vehicle.

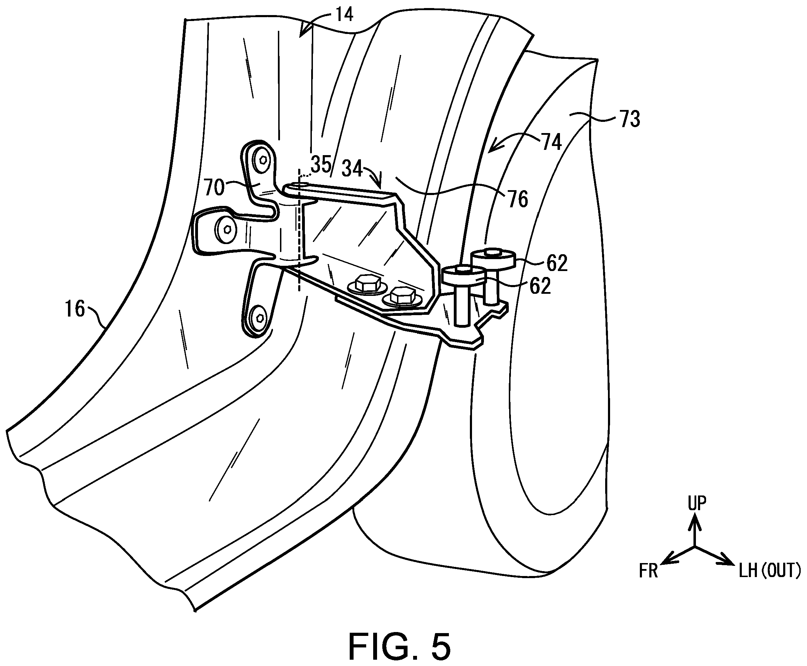

The vehicle 10 includes an upper rail 20, a center rail 22, and a lower rail 24. The upper rail 20 and the center rail 22 are disposed on the body side 14, and the lower rail 24 is disposed on a lower part of the door 18. The door 18 includes an upper hinge 30 and a center hinge 32 corresponding to the upper rail 20 and the center rail 22, respectively. Further, the body side 14 includes a lower hinge 34 (see FIG. 5) corresponding to the lower rail 24. Each of the hinges 30, 32, and 34 (see FIG. 1) includes one or more rollers (details of which will be described below) that roll in contact with the rails 20, 22, and 24, respectively.

As illustrated in FIG. 1, the upper rail 20 is disposed on the body side 14 along the upper edge of the entrance/exit opening 16 to guide the upper hinge 30 that slides along with the door 18. The center rail 22 extends rearward from a rear edge of the entrance/exit opening 16 and is disposed on the body side 14 to guide the center hinge 32 that slides along with the door 18. The lower rail 24 is disposed on the door 18 at a level lower than the center rail 22 to guide the lower hinge 34 disposed on the body side 14. In the following description, the upper rail 20, the center rail 22, and the lower rail 24 will also be referred to simply as the rails 20, 22, and 24, respectively. Further, the upper hinge 30, the center hinge 32, and the lower hinge 34 will also be referred to simply as the hinges 30, 32, and 34.

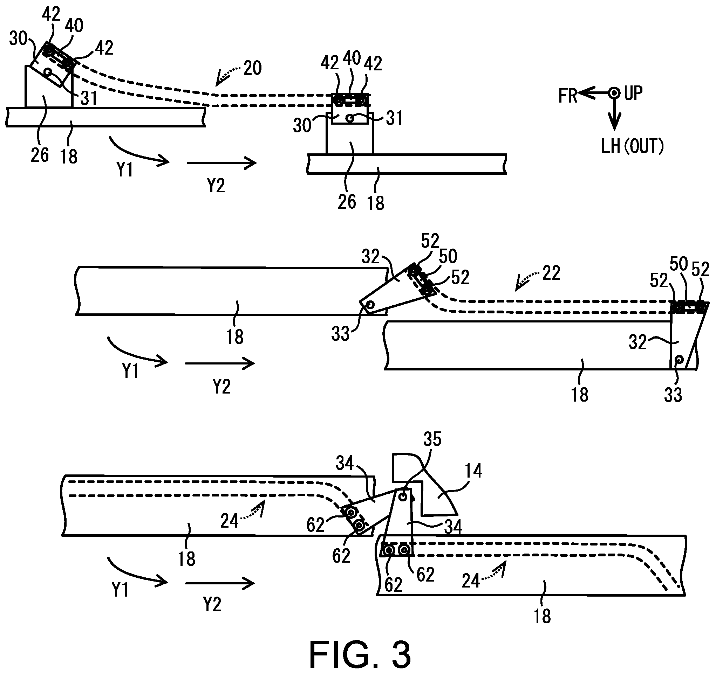

FIG. 3 schematically illustrates the rails 20, 22, and 24 disposed on the upper part, center part, and lower part of the vehicle 10, respectively, and the hinges 30, 32, and 34 to be engaged with the rails 20, 22, and 24, respectively. FIG. 3 illustrates sliding of the door 18, and indicates the closed state and the open state in an overlapping manner. FIG. 3 shows a structure related to the upper rail 20 in the upper part of the drawing, a structure related to the center rail 22 in the center part of the drawing, and a structure related to the lower rail 24 in the lower part of the drawing.

The upper rail 20 is curved inward in the vehicle width direction as the upper rail 20 extends toward its front end, and has a substantially linear shape in a region closer to its rear end with respect to the curved portion. An arm 26 extending inward in the vehicle width direction is attached to the door 18, and the upper hinge 30 is attached to the arm 26 such that the upper hinge 30 is pivotable about a pivot axis 31.

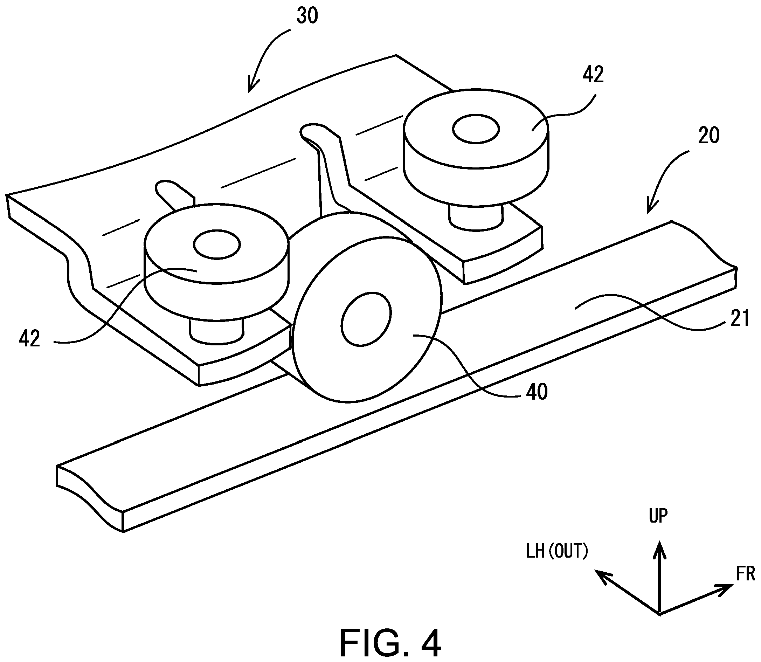

FIG. 4 is a perspective view illustrating a part of the upper hinge 30 and a part of the upper rail 20. The upper hinge 30 includes a single load roller 40 that supports the weight of the door 18, and two guide rollers 42 that provide guidance within a horizontal plane. The load roller 40 is disposed between the two guide rollers 42. The load roller 40 is attached to the upper hinge 30 such that the load roller 40 is pivotable about an axis line extending horizontally. The two guide rollers 42 are each attached to the upper hinge 30 such that the guide rollers 42 are pivotable about respective axis lines extending vertically.

The upper rail 20 includes a support rail part 21 and a guide rail part that is not shown. The support rail part 21 guides the load roller 40 that rolls on the top surface of the support rail part 21 with the movement of the upper hinge 30. The guide rail part has an inverted U-shape (with right-angled corners) cross section, and guides the two guide rollers 42 contained within the inverted U shape within a horizontal plane.

As illustrated in FIG. 3, the center rail 22 is curved inward in the vehicle width direction as the center rail 22 extends toward its front end, and has a substantially linear shape in a region closer to its rear end with respect to the curved portion. The center hinge 32 is disposed on the door 18 such that the center hinge 32 is pivotable about a pivot axis 33. The center hinge 32 may be disposed on the door 18 via a member such as an arm.

The center hinge 32 includes a single load roller 50 that supports the weight of the door 18, and two guide rollers 52 that provide guidance within the horizontal plane. The load roller 50 is disposed between the two guide rollers 52. The configurations of the center hinge 32 and the rollers 50 and 52 are similar to those of the upper hinge 30 and the rollers 40 and 42 described above with reference to FIG. 4, respectively. The configuration of the center rail 22 is also similar to the configuration of the upper rail 20 described above. Specifically, the center rail 22 includes a support rail part for the load roller 50 and a guide rail part for the two guide rollers 52.

As illustrated in FIG. 3, the lower rail 24 is disposed on the door 18. The lower rail 24 is curved outward in the vehicle width direction as the lower rail 24 extends toward its rear end, and has a substantially linear shape in a region closer to its front end with respect to the curved portion. The lower hinge 34 is disposed on the body side 14 such that the lower hinge 34 is pivotable about a pivot axis 35.

FIG. 5 is a perspective view illustrating the lower hinge 34, and shows a position of the lower hinge 34, with the door 18, which is not shown in FIG. 5, being in the open state. The lower hinge 34 includes two guide rollers 62 that provide guidance within the horizontal plane. The two guide rollers 62 are each attached to the lower hinge 34 such that the two guide rollers 62 are pivotable about respective axis lines extending vertically. The lower hinge 34 does not include a load roller that supports the weight of the door 18.

As illustrated in FIG. 5, a fixing member 70 is disposed on a rear edge portion of the entrance/exit opening 16. The lower hinge 34 is pivotable about a pivot axis 35 with respect to the fixing member 70. To create a rear wheel well 74, the vehicle 10 includes an outer wall 76 that protrudes outward in the vehicle width direction in front of the rear wheel well 74. FIG. 5 partially illustrates each of a rear tire 73 and the rear wheel well 74. In the open state of the door 18, the lower hinge 34 is adjacent to the outer wall 76 of the rear wheel well 74, as illustrated in FIG. 5. This configuration inhibits the lower hinge 34 from obstructing occupants getting in and out of the vehicle 10 through the entrance/exit opening 16 in the open state of the door 18.

The lower rail 24 (see FIG. 3) includes a guide rail part. The guide rail part has an inverted U-shape (with right-angled corners) cross section, for example, and guides the two guide rollers 62 contained in the inverted U-shape within the horizontal plane. The lower rail 24 does not include the support rail part 21 which is illustrated in FIG. 4.

To open the door 18 from the closed state shown on the left side in FIG. 3, the door 18 is first guided to the curved portions of the respective rails 20, 22, and 24, as indicated with an arrow Y1, and then moves outward in the vehicle width direction while moving rearward. This movement causes the door 18 to protrude further outward in the vehicle width direction than the body side 14. Subsequently, the door 18 slides rearward along the outer face of the body side 14 as indicated with an arrow Y2, into the open state illustrated on the right side in FIG. 3.

To close the door 18, the door 18 operates in a reversed manner. As the door 18 approaches the closed position, a lock unit that is not shown operates to draw the door 18 toward the closed position.

The upper rail 20 supports a part of the self weight of the door 18 via the arm 26, the upper hinge 30, and the load roller 40. The center rail 22 supports the remaining part of the self weight of the door 18 via the center hinge 32 and the load roller 50. This configuration enables the two rails (the upper rail 20 and the center rail 22) to support the self weight of the door 18 in a shared manner.

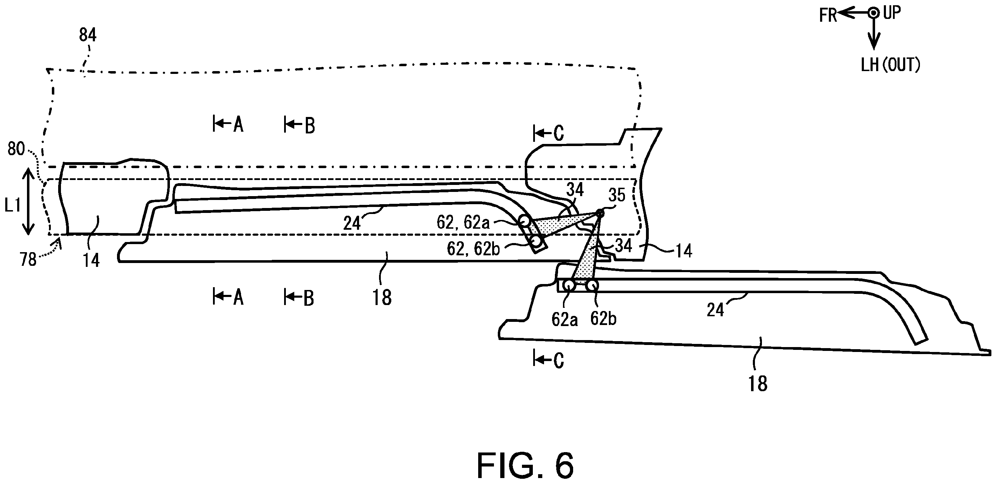

FIG. 6 schematically illustrates the positional relation of the lower hinge 34, the lower rail 24, a rocker panel 80, and a battery 84. FIG. 6, similar to FIG. 3, indicates the closed state and the open state of the door 18 in an overlapping manner. The rocker panel 80 is partially indicated with a broken line, and the battery 84 is partially indicated with alternate long and short dashed lines. In FIGs. 6 to 8, of the two guide rollers 62, a guide roller located inward in the vehicle width direction with the door 18 being closed is denoted with reference numeral 62a, and a guide roller located outward in the vehicle width direction in this state is denoted with reference numeral 62b.

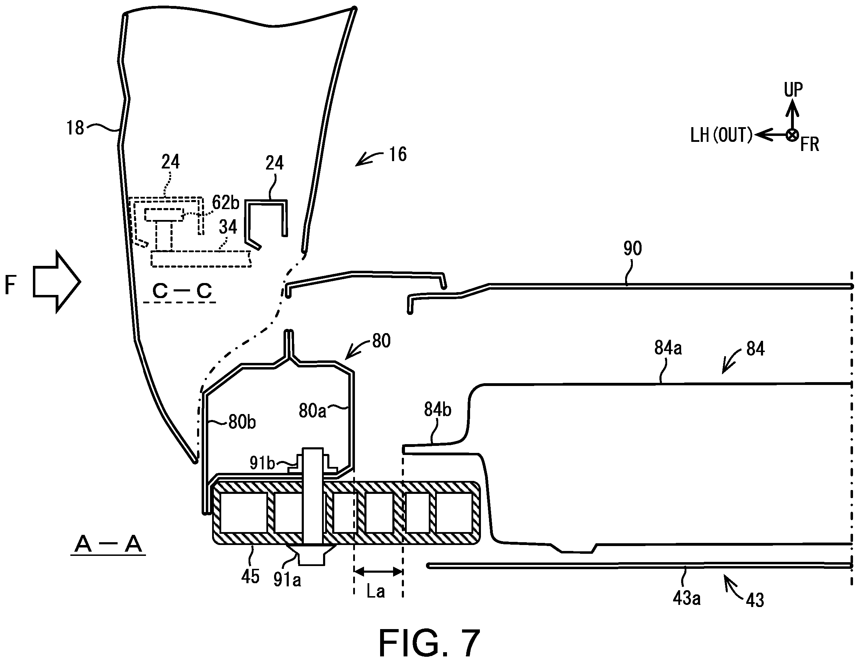

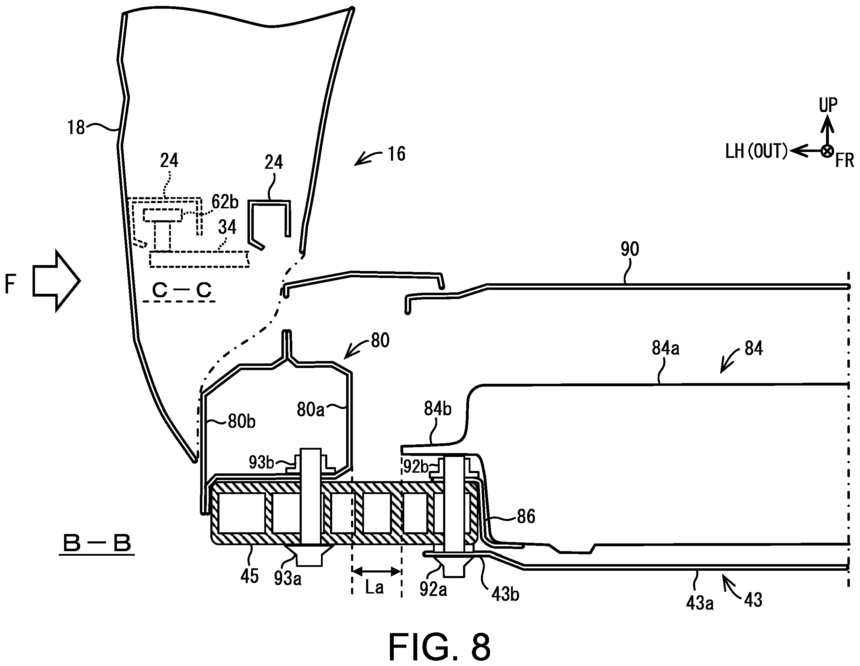

FIG. 7 is a cross sectional view taken along line A-A of FIG. 6, and FIG. 8 is a cross sectional view taken along line B-B line of FIG. 6. FIGs. 7 and 8 additionally indicate, with broken lines, the lower rail 24, the guide roller 62b, and the lower hinge 34 in a cross section taken along line C-C of FIG. 6. FIGs. 7 and 8 show the cross section of each member in the closed state of the door 18.

As illustrated in FIG. 7, the vehicle 10 includes the rocker panel 80 and the battery 84. The rocker panel 80 constitutes the lower edge of the entrance/exit opening 16 and extends along the vehicle length. The rocker panel 80 is also referred to as a side sill. The rocker panel 80 includes a rocker inner panel 80a and a rocker outer panel 80b. The rocker inner panel 80a is located inward in the vehicle width direction, and the rocker outer panel 80b is located outward in the vehicle width direction. The rocker inner panel 80a and the rocker outer panel 80b may each have a substantially hat-shaped cross section. The rocker inner panel 80a and the rocker outer panel 80b have respective upper edges that are joined to each other and respective lower edges that are also joined to each other. The interior of the rocker panel 80 forms a closed space extending along the vehicle length. The rocker panel 80 may be composed of three or more panels, rather than the two panels, the rocker inner panel 80a and the rocker outer panel 80b. The rocker panel 80 may constitute a part of the frame of the vehicle body.

The battery 84 is a battery pack that supplies electric power to a motor for vehicle traveling, which is not shown. The battery 84 is disposed under a floor 90 of the vehicle 10. The battery 84 includes a battery body 84a, and a flange 84b that protrudes outward in the vehicle width direction from a substantially center of the battery body 84a in the vertical direction.

The rocker panel 80 is located further outward in the vehicle width direction than the battery 84, and is adjacent to the battery 84 in the vehicle width direction.

The vehicle 10 includes an energy-absorbing member 45 and a shear panel 43. The energy-absorbing member 45 is composed of a metal such as aluminum, and extends along the vehicle length with a uniform cross section. The energy-absorbing member 45 includes a plurality of hollows extending along the vehicle length. The energy-absorbing member 45 deforms by compression in the event of a side collision to absorb the impact energy.

The shear panel 43 is disposed under the battery 84 and constitutes a bottom face of the vehicle 10. The shear panel 43 includes a shear panel body 43a and a fastening portion 43b (see FIG. 8).

The energy-absorbing member 45 is disposed on the lower face of the rocker panel 80. The energy-absorbing member 45 is fixed to the rocker panel 80 at points spaced from each other along the vehicle length, with a plurality of bolts and nuts. In the cross section illustrated in FIG. 7, a bolt 91a extends through the energy-absorbing member 45 and the lower wall of the rocker panel 80 and is fastened to a nut 91b within the rocker panel 80. In the cross section illustrated in FIG. 8, another bolt 93a extends through the energy-absorbing member 45 and the lower wall of the rocker panel 80 and is fastened to a nut 93b within the rocker panel 80.

An outward end portion of the energy-absorbing member 45 in the vehicle width direction is in contact with or adjacent to the lower edge of the rocker panel 80. An inward end portion of the energy-absorbing member 45 in the vehicle width direction is located under the flange 84b of the battery 84 and is also adjacent to the side face of the battery 84 (battery body 84a).

Fastening portions 43b of the shear panel 43 are disposed at intervals along the vehicle length in the outward end of the shear panel 43 in the vehicle width direction. The fastening portion 43b corresponds to a portion that protrudes upward from the shear panel body 43a. The fastening portion 43b is disposed on the lower face of the energy-absorbing member 45. The shear panel 43 is fixed to the energy-absorbing member 45 at points spaced from each other along the vehicle length, with a plurality of bolts and nuts. Thus, in each fastening portion 43b of the shear panel 43, the bolt 92a extends through the fastening portion 43b and the energy-absorbing member 45 and is fastened to the nut 92b on the top surface of the energy-absorbing member 45.

As illustrated in FIG. 8, brackets 86 are disposed on the battery 84 at intervals along the vehicle length (FIG. 8 shows only one bracket 86). An inward end of each bracket 86 in the vehicle width direction is fixed to the bottom face of the battery 84 (battery body 84a), and an outward end of each bracket 86 is located on the top face of the energy-absorbing member 45. The outward end of the bracket 86 is fixed, with the bolt 92a and the nut 92b for shear panel fastening, to the top face of the energy-absorbing member 45. This configuration causes the rocker panel 80 to be connected with the battery 84 via the energy-absorbing member 45 and the bracket 86 interposed therebetween, as illustrated in FIG. 8.

The lower rail 24, the lower hinge 34, and the two guide rollers 62 are disposed further upward than the battery 84. The rocker panel 80 is spaced, by an interval of La, from the battery 84 (more specifically, the flange 84b of the battery 84) in the vehicle width direction. The interval La is 20 mm to 40 mm, for example.

As illustrated in FIG. 6, in the closed state of the door 18, a part of the lower rail 24 and a part of the lower hinge 34 are located further outward in the vehicle width direction than the rocker panel 80. Further, in the closed state of the door 18, a part of the lower rail 24 and a part of the lower hinge 34 are located above the rocker panel 80.

In the embodiment described above, the configuration in which the lower rail 24 is disposed in the lower part of the door 18 eliminates the need for a lower rail disposed on the body side 14. This configuration enables extension of the battery 84 outward in the vehicle width direction to thereby increase the capacity of the battery 84, as illustrated in FIGs. 7 and 8. This further enables an increase in the range of the vehicle 10.

Further, in the embodiment described above, the lower rail 24 and the lower hinge 34 are disposed further upward than the battery 84, as illustrated in FIGs. 7 and 8. In the event of a side collision, this configuration prevents interference, with the battery 84, by the lower rail 24 and the lower hinge 34, which would move inward of the vehicle body in the width direction due to input of a collision load F to the vehicle 10 from outside the vehicle 10.

In the embodiment described above, the rocker panel 80 is adjacent to the battery 84. This configuration enables the rocker panel 80 to protect the battery 84 when a collision load F is applied to the vehicle 10 from outside the vehicle 10 in the event of a side collision. Further, the battery 84 that is extended to the location adjacent to the rocker panel 80 has an increased capacity.

In the embodiment described above, the rocker panel 80 is connected with the battery 84 via the energy-absorbing member 45 and the bracket 86, as illustrated in FIG. 8. This configuration enables the rocker panel 80 and the energy-absorbing member 45 to absorb the impact energy to thereby protect the battery 84 when a collision load F is applied to the vehicle 10 from outside the vehicle 10 in the event of a side collision. This also enables a reduction in the collision load to be applied to the battery 84.

In the embodiment described above, the rocker panel 80 is spaced from the battery 84 in the vehicle width direction by an interval of La (20 mm to 40 mm, for example). This configuration reduces an unnecessary space between the rocker panel 80 and the battery 84 to thereby increase the capacity of battery 84. A reduction in the interval La may be achieved by disposing the energy-absorbing member 45 to secure safety in the event of a side collision.

In the embodiment described above, in the closed state of the door 18, a part of the lower rail 24 and a part of the lower hinge 34 are disposed further outward in the vehicle width direction than the rocker panel 80. This configuration allows a colliding object to come into contact with the lower rail 24 and the lower hinge 34 before contacting the rocker panel 80 in the event of a side collision, thereby reducing a collision load to be input to the rocker panel 80. This further protects the battery 84 disposed further inward in the vehicle width direction than the rocker panel 80. In the closed state of the door 18, at least a part (whole or a part) of the lower rail 24 and at least a part (whole or a part) of the lower hinge 34 may be disposed further outward in the vehicle width direction than the rocker panel 80.

In the embodiment described above, in the closed state of the door 18, a part of the lower rail 24 and a part of the lower hinge 34 are disposed above the rocker panel 80, as illustrated in FIG. 6. This configuration enables the lower rail 24, the lower hinge 34, and the rocker panel 80 to share the bearing of the collision load in the event of a side collision, and prevents a colliding object from moving inward in the vehicle width direction into the vehicle body. In the closed state of the door 18, at least a part (whole or a part) of the lower rail 24 and at least a part (whole or a part) of the lower hinge 34 may be disposed above the rocker panel 80.

The rocker panel 80 may have higher rigidity than the lower hinge 34 and the guide rollers 62. In this configuration, in the event of a side collision, a colliding object comes into contact with the lower hinge 34 and the guide rollers 62 to move the lower hinge 34 and the guide rollers 62 inward in the vehicle width direction. The colliding object then comes into contact with the rocker panel 80 to allow the lower hinge 34 (and also the guide rollers 62) and the rocker panel 80 to be aligned vertically, thereby dispersing the collision load to be applied to the lower hinge 34 and the rocker panel 80, respectively. This prevents the lower hinge 34 and the rocker panel 80 from entering the vehicle cabin and the battery 84.

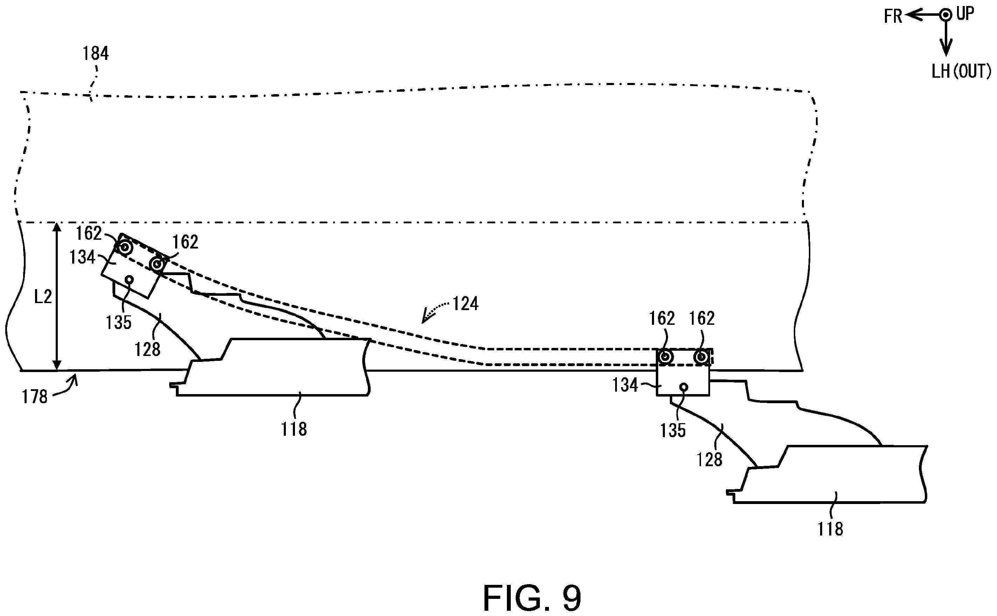

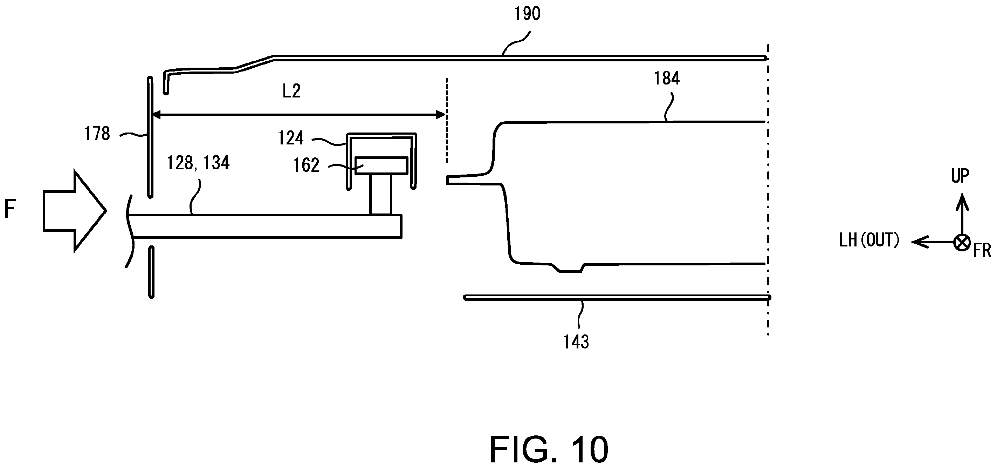

FIGs. 9 and 10 illustrate a lower structure of a vehicle according to a comparative example. FIG. 9 is a plan view schematically illustrating a lower rail 124 and its peripheral structure. FIG. 9 shows sliding of a door 118, and indicates a closed state and an open state of the door 118 in an overlapping manner. FIG. 10 is a cross sectional view schematically illustrating the lower rail 124 and its peripheral structure viewed from rearward of the vehicle.

In the comparative example shown in FIGs. 9 and 10, in contrast to the embodiment described above, the lower rail 124 is disposed in the lower part on the side of the vehicle body, and a lower hinge 134 is disposed in the lower part of the door 118. As illustrated in FIG. 10, the lower rail 124 is disposed adjacent to a battery 184 in the vehicle width direction. Specifically, as illustrated in FIG. 9, the lower rail 124 is curved inward in the vehicle width direction as the lower rail 124 extends toward the front end of the lower rail 124, and has a substantially linear shape in a region closer to the rear end of the lower rail 124 with respect to the curved portion. An arm 128 extending inward in the vehicle width direction is attached to the door 118, and the lower hinge 134 is attached to the arm 128 in a manner that the lower hinge 134 is pivotable about a pivot axis 135. The lower hinge 134 includes two guide rollers 162 that are guided by the lower rail 124 within the horizontal plane.

To open the door 118 from the closed state thereof shown in the left part of FIG. 9, the door 118 is first guided in the curved portion of the lower rail 124 and moves outward in the vehicle width direction while moving rearward. The door 118 then slides rearward along the outer surface of the body side into the open state indicated in the right part of FIG. 9. As such, the lower rail 124 having the curved portion occupies a relatively large area in the lower side part of the vehicle body.

In this comparative example, it is not possible to install the battery 184 in the lower side part of the vehicle body where the lower rail 124 is disposed. In other words, it is not possible to extend the battery 184 outward in the vehicle width direction. This configuration reduces the capacity of the battery 184. Specifically, this configuration increases the interval L2 from a side face 178 of the vehicle body to the outward end of the battery 184 in the vehicle width direction.

In contrast, in the embodiment described above, the lower rail 24 is disposed on the door 18, as illustrated in FIG. 6. This configuration reduces the interval L1 from the side face 78 of the vehicle body to the outward end of the battery 84 in the vehicle width direction, thereby enabling an increase in the capacity of the battery 84.

Further, as illustrated in FIG. 10, in the comparative example, the lower rail 124, the lower hinge 134, and the battery 184 are disposed side by side in the vehicle width direction. This configuration may cause the lower rail 124 and the lower hinge 134 to move inward of the vehicle body in the vehicle width direction to interfere with the battery 184 when a collision load F is applied to the vehicle from outside the vehicle in the event of a side collision. To prevent this, it is necessary to further increase the distance between the lower rail 124 and the battery 184 or to increase the capacity of the energy-absorbing member disposed between the lower rail 124 and the battery 184.

Meanwhile, in the embodiment described above, the lower rail 24 and the lower hinge 34 are disposed in further upward than the battery 84, as illustrated in FIGs. 7 and 8. This configuration prevents the lower rail 24 and the lower hinge 34 from interfering with the battery 84 when the lower rail 24 and the lower hinge 34 move inward in the width direction of the vehicle body in the event of a side collision. The embodiment described above adopts the simple energy-absorbing member 45 to thereby reduce the amount of the energy-absorbing member 45 to be installed. This further results in a reduction of both mass and cost of the vehicle 10.

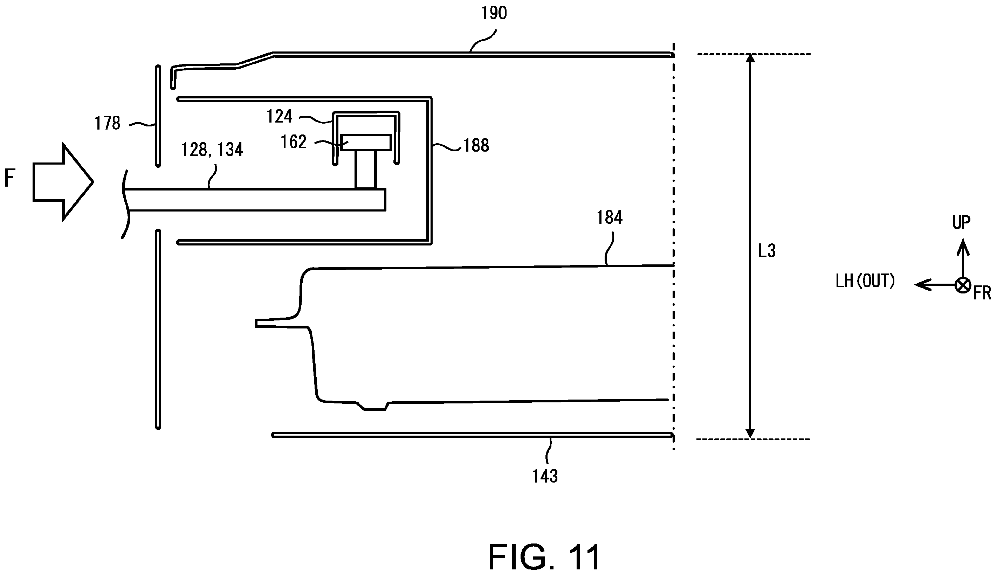

FIG. 11 schematically illustrates a lower structure of a vehicle in another comparative example. In the structure illustrated in FIG. 11, in contrast to the above-described structure illustrated in FIG. 10, the lower rail 124 and the lower hinge 134 are disposed above the battery 184. The lower rail 124 and the lower hinge 134 are disposed inside a box-like container portion 188. The structure illustrated in FIG. 11 avoids interference between the lower rail 124 and the lower hinge 134, and the battery 184, when the lower rail 124 and the lower hinge 134 move inward in the width direction of the vehicle body in the event of a side collision. However, this structure raises the level of the floor 190 of the vehicle. In other words, the level of the step used by an occupant to get in the vehicle is raised.

Meanwhile, in the embodiment described above, the level of the floor 90 of the vehicle 10 is lowered as illustrated in FIGs. 7 and 8, which results in lowering of the step used by an occupant to get in the vehicle 10. It is therefore possible to lower the level of the step while sufficiently securing the lowest above ground level of the vehicle 10.

### REFERENCE SIGNS LIST

10 vehicle, 14 body side, 16 entrance/exit opening, 18 sliding door, 20 upper rail, 21 support rail part, 22 center rail, 24 lower rail, 26 arm, 30 upper hinge, 31 pivot axis, 32 center hinge, 33 pivot axis, 34 lower hinge, 35 pivot axis, 40 load roller, 42 guide roller, 43 shear panel, 43a shear panel body, 43b fastening portion, 45 energy-absorbing member, 50 load roller, 52 guide roller, 62, 62a, 62b guide roller, 70 fixing member, 73 rear tire, 74 rear wheel well, 76 outer wall, 78 side face, 80 rocker panel, 80a rocker inner panel, 80b rocker outer panel, 84 battery, 84a battery body, 84b flange, 86 bracket, 90 floor, 91a, 92a, 93a bolt, 91b, 92b, 93b nut, 124 lower rail, 128 arm, 134 lower hinge, 135 pivot axis, 143 shear panel, 162 guide roller, 184 battery, 178 side face, 188 container portion, 190 floor.

## Claims

1. A vehicle (10) equipped with a sliding door (18), the vehicle (10) comprising:
a body side (14) including an entrance/exit opening (16) through which an occupant enters or exits from the vehicle (10);
a sliding door (18) configured to slide to open or close the entrance/exit opening (16);
a lower rail (24) disposed in a lower part of the sliding door (18);
a lower hinge (34) disposed on the body side (14), the lower hinge (34) configured to be guided by the lower rail (24); and
a battery (84) disposed under a floor (90) of the vehicle, wherein
the lower rail (24) and the lower hinge (34) are disposed further upward than the battery (84).

2. The vehicle (10) equipped with the sliding door (18) according to claim 1, further comprising:
a rocker panel (80) extending in a vehicle length direction and defining a lower edge of the entrance/exit opening (16), wherein
the rocker panel (80) is located further outward in a vehicle width direction than the battery (84) and is adjacent to the battery (84) in the vehicle width direction.

3. The vehicle (10) equipped with the sliding door (18) according to claim 2, wherein
the rocker panel (80) is connected with the battery (84) with an energy-absorbing member (45) interposed between the rocker panel (80) and the battery (84).

4. The vehicle (10) equipped with the sliding door (18) according to claim 3, wherein
the rocker panel (80) is spaced from the battery (84) by an interval of 20 mm to 40 mm in the vehicle width direction.

5. The vehicle (10) equipped with the sliding door (18) according to claim 2, wherein
in a closed state of the sliding door (18), at least a part of the lower rail (24) and at least a part of the lower hinge (34) are disposed further outward in the vehicle width direction than the rocker panel (80).

6. The vehicle (10) equipped with the sliding door (18) according to claim 2, wherein
in a closed state of the sliding door (18), at least a part of the lower rail (24) and at least a part of the lower hinge (34) are disposed above the rocker panel (80).

7. The vehicle (10) equipped with the sliding door (18) according to any one of claims 1 to 6, wherein
the lower hinge (34) is pivotable with respect to a fixing member (70) disposed on a rear edge portion of the entrance/exit opening (16) and is, in an open state of the sliding door (18), adjacent to an outer wall (76) protruding outward in the vehicle width direction to form a rear wheel well (74), the outer wall (76) protruding in front of the rear wheel well (74).
